Europäisches Patentamt

European Patent Office

Office européen des brevets

(11) Publication number: **0 412 823 A2**

# EUROPEAN PATENT APPLICATION

(21) Application number: 90308792.2

(51) Int. Cl.5: **B29C 67/14**

(22) Date of filing: 09.08.90

(30) Priority: 09.08.89 JP 204886/89

(43) Date of publication of application:
13.02.91 Bulletin 91/07

(84) Designated Contracting States:
DE FR GB

(71) Applicant: NIPPON OIL CO., LTD.
3-12, 1-chome, Nishi-shimbashi Minato-ku
Tokyo(JP)

(72) Inventor: Morohashi, Kazuo
9-17, Kounadai, Kounan-ku
Yokohama-shi, Kanagawa-ken(JP)
Inventor: Ikeda, Tetsufumi
2-228, Kosugi-cho, Nakahara-ku
Kawasaki-shi, Kanagawa-ken(JP)

(74) Representative: Silverman, Warren et al
HASELTINE LAKE & CO. Hazlitt House 28
Southampton Buildings Chancery Lane
London WC2A 1AT(GB)

(54) Method of manufacturing FRP-made hollow products.

(57) According to the invention, there is provided a method of manufacturing a FRP-made hollow product, which comprises the steps of arranging thermosetting resin-impregnated reinforcing fibers in parallel in the longitudinal direction, passing the arranged reinforcing fibers through an opening defined by a mandrel and a die to obtain a thin-walled hollow hardened blank, and then passing the hollow hardened blank together with synthetic resin-impregnated reinforcing fibers arranged around said blank in the circumferential and longitudinal directions thereof through a different die.

F I G. 3

EP 0 412 823 A2

## METHOD OF MANUFACTURING FRP-MADE HOLLOW PRODUCTS

This invention relates to a method of manufacturing FRP-made hollow products and more particularly to a method of manufacturing, by means of drawing an elongate, thin-walled FRP-made hollow product which has excellent mechanical properties and is required to have dimensional accuracy.

In the prior art method of forming FRP (fiber-reinforced plastics), a drawing process is known as a method of manufacturing, continuously and in great quantities, elongate products having a fixed sectional shape such as pipes, rods and angles.

In the usual drawing process, reinforcing fibers are arranged in parallel, impregnated with a thermosetting resin and then passed through a die having a fixed opening shape, thereby hardening the resin. Such a hollow product may also be obtained by passing a die in which a mandrel having a given shape is disposed.

In the above method, however, reinforcing fibers can be arranged only in the longitudinal direction. Therefore, the mechanical strength of the resulting FRP in the direction perpendicular to the fibers is generally low, which leads to a deficiency of the product obtained by the prior art drawing process and raises a serious problem particularly in thin-walled hollow products.

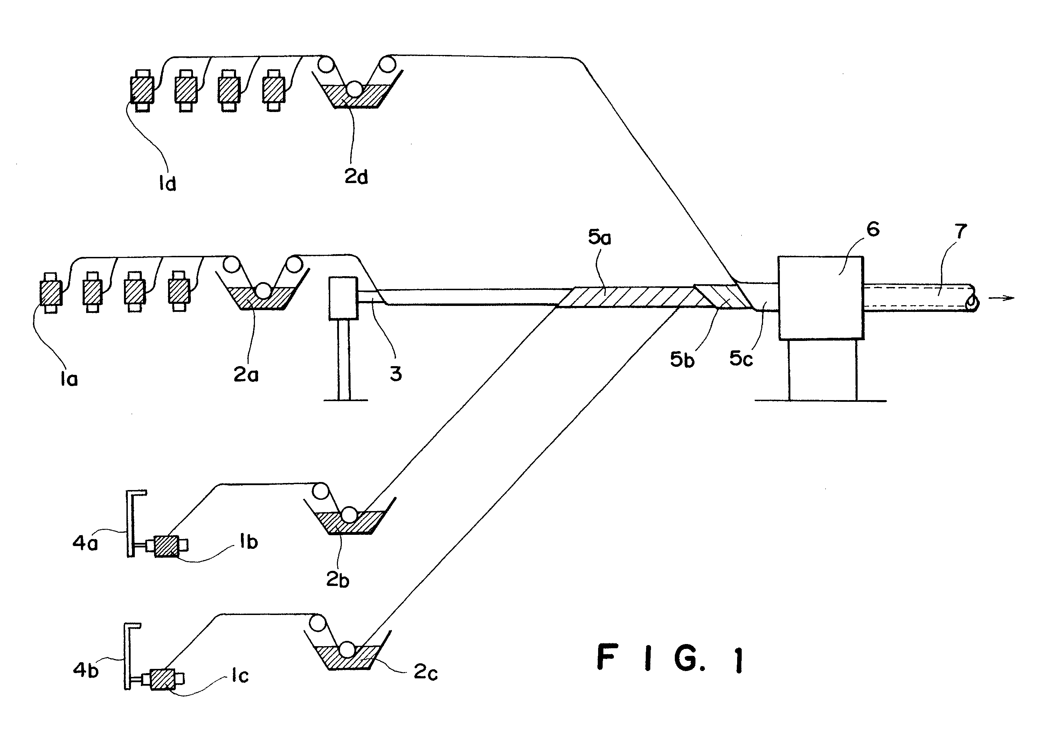

In order to overcome such a drawback in the thin-walled hollow products, there has been proposed an improved process in which the prior art drawing process is combined with filament winding (F/W) thereby to enable reinforcing fibers to be arranged not only in the longitudinal direction but also in the circumferential direction of the resulting FRP using a circumferential winder. Figure 1 schematically shows an example of an apparatus for carrying out said improved drawing process. In the Figure, reference numbers 1a to 1d are reinforcing fibers, 2a to 2d resin mixtures, 3 a mandrel, 4a to 4b circumferential winders, 5a to 5b circumferential resin-impregnated reinforcing fiber layers, 5c a longitudinal resin-impregnated reinforcing fiber layer, 6 a die, and 7 a final product.

In this improved method, however, an elongate mandrel exceeding 5 m in length as shown in Fig. 1 is necessary for the structure of the apparatus. Such an elongate mandrel is subject to sagging and vibrations, thus making it difficult to obtain a thin-walled hollow product having high dimensional accuracy.

Accordingly, there has also been proposed another improved process by which thin-walled hollow pipes having high dimensional accuracy are obtained by forming while moving mandrels about 2 m in length connected to one another at the same speed as the resulting product (as disclosed in Japanese Patent Appln. Laid-Open Gazette No. 61-199933). In this case, however, it is necessary to cut the product accurately at a position corresponding to the seam between adjacent unit mandrels, this resulting in rendering the apparatus structurally complex and the process infeasible.

An object of the invention is to solve the above problems by the provision of a method of manufacturing FRP-made hollow products having excellent mechanical properties and high dimensional accuracy.

According to the invention, there is provided a method of manufacturing FRP-made hollow products, which comprises the steps of arranging in the longitudinal direction reinforcing fibers impregnated with a thermosetting resin, passing the arranged reinforcing fibers through an opening defined by a mandrel and a die to obtain a thin-walled hollow hardened blank, and then passing the hollow hardened blank together with synthetic resin-impregnated reinforcing fibers arranged in circumferential and longitudinal directions through a different die. For a better understanding fo the invention and to show how the same can be carried into effect, reference will now be made, by way of example only to the accompanying drawings wherein.

Fig. 1 is a schematic view showing a prior art forming apparatus with circumferential winders;

Fig. 2 is a schematic view showing an example of an apparatus for carrying out the invention; and

Fig. 3 is a sectional view showing a final product obtained according to the invention.

Reference will be made to the drawings where appropriate in the description which follows.

According to the invention, reinforcing fibers which may be used in the step of arranging reinforcing fibers impregnated with a thermosetting resin in the longitudinal direction, include carbon fibers, glass fibers and aramide fibers. Thermosetting resins which may be used in this step include unsaturated polyester resins, vinylester resins, epoxy resins, phenol resins, furan resins and polyimide resins. The reinforcing fibers may be impregnated with the thermosetting resin in a usual way of introducing the reinforcing fibers into a resin tank. Alternatively, it is also possible to use tapes or the like which have been impregnated with a thermosetting resin in advance.

The reinforcing fibers impregnated with the thermosetting resin in this way are arranged in parallel in the longitudinal direction and then introduced into an opening defined by a mandrel and a die and having a predetermined shape, thereby to thermally harden the resin so impregnated. The temperature of the die is set to be at least the same as the hardening temperature of the thermosetting resin, usually 120 to 250 °C.

The thin-walled hollow blank that is obtained through the opening noted above has a wall thickness of usually 1 to 5 mm, preferably 1 to 2 mm. If the wall thickness a thin-walled hollow blank obtained is less than 1 mm, the rupture strength thereof is low, and the hollow blank is difficultly able to function as a core in the next step. If a hollow blank exceeding 5 mm in wall thickness is intended to be made, a long time will be required for the hardening of a resin impregnated. In this case, the line speed will be lessened and this will be infeasible. Further, it is important that the length of the mandrel be within a certain limit in order to obtain hollow hardened blanks having a uniform wall thickness and then obtain final products having high dimensional accuracy.

Subsequently, the thin-walled hollow hardened blank thus obtained is used as the core while reinforcing fibers impregnated with a synthetic resin are arranged around the core in the circumferential and longitudinal directions thereof. In this step, carbon fibers, glass fibers, aramide fibers, etc. may be used as reinforcing fibers. The synthetic resins which may be used are thermosetting resins and thermoplastic resins. Examples of the thermosetting resin are unsaturated polyester resins, vinylester resins, epoxy resins, phenol resins, furan resins and polyimide resins. Examples of the thermoplastic resin are polyamide, liquid crystal aromatic polyamide, polyester, liquid crystal aromatic polyester, polyethylene, polypropyrene, polycarbonate, polysulfone, polyethersulfone, polyphenylene sulfide, polyether ketone, and polyether ether ketone. The impregnation of the reinforcing fibers with these synthetic resins may be carried out by a usual method of introducing reinforcing fibers in a resin tank, and it is also possible to use tapes or the like which have been impregnated with a synthetic resin in advance.

The arrangement of resin-impregnated reinforcing fibers around the core in the circumferential direction may be carried out by the use of a circumferential winder which functions to wind fibers on the core in both forward and reverse directions at a predetermined angle with respect to the longitudinal direction of the core. The angle at which the reinforcing fibers are circumferentially arranged with respect to the longitudinal direction of the core is usually ±10 to ±80 degrees, preferably ±30 to ±60 degrees and more preferably ±45 degrees.

After the synthetic resin-impregnated reinforcing fibers have been arranged circumferentially around the thin-walled hollow hardened blank as the core, other synthetic resin-impregnated reinforcing fibers are arranged around the resultant fiber-wound cored in the longitudinal direction thereof, and the resultant system is passed through a die having a predetermined shape for thermal treatment, thereby obtaining a FRP-made hollow product as the final product. The reason why the other reinforcing fibers are arranged in the longitudinal direction after the arrangement of the reinforcing fibers around the core in the circumferential direction thereof is to prevent the circumferentially arranged reinforcing fibers from going out of order while they pass through the die, in addition to having an effect of improving the system in physical properties in the longitudinal direction.

The thermal treatment in the die is performed at a temperature not lower than the hardening temperature of a thermosetting resin when this resin is used, the former being usually 120 to 250 °C. When a thermoplastic resin is used, the thermal treatment is carried out at a temperature not lower than the melting point of the thermoplastic resin, the treating temperature being usually 120 to 350 °C, and then the resin so impregnated is cooled for solidification.

As for the preferable proportions of cross-sectional area among the component layers in the sectional area of the final product, the layer of thin-walled hollow hardened blank as the core is in the range of 20 to 40 %, the layer of circumferentially arranged reinforcing fibers is in the range of 20 to 50 %, and the outermost layer of longitudinally arranged reinforcing fibers is in the range of 10 to 60 %.

The invention will be better understood by the following non-limitative Example in comparison with Comparative Examples.

Example 1

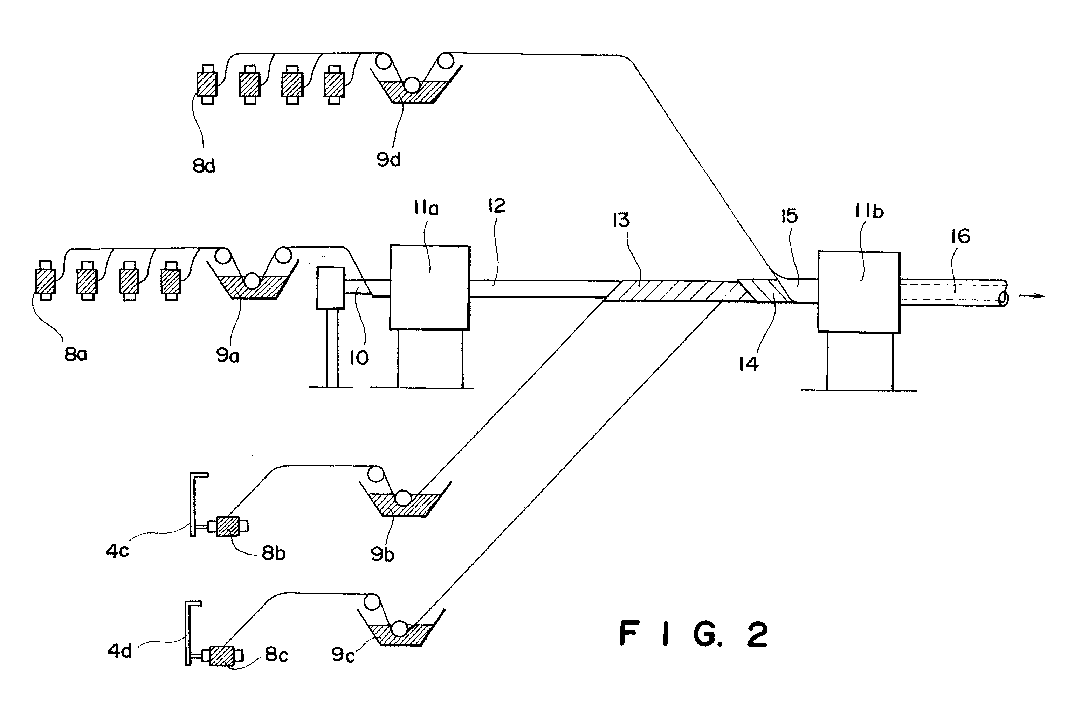

Figure 2 schematically shows an example of the apparatus for carrying out the invention. In the Figure, reference numerals 4c to 4d are circumferential winders, 8a to 8d reinforcing fibers, 9a to 9d resin mixtures, 10 a mandrel, 11a to 11b a die, 12 a hollow hardened blank, 13 and 14 circumferentially arranged resin-impregnated reinforcing fiber layers, 15 a longitudinally arranged resin-impregnated reinforcing layer, and 15 a final product.

Carbon fibers with a mechanical strength of 350 kg f/mm² and an elastic modulus of 24 t f/mm² were provided as the reinforcing fibers 8a, impregnated with a resin mixture 9a prepared from a bisphenol A type epoxy resin as the thermosetting resin, amine-based hardening agent, filler (i.e., calcium carbonate) and internal releasing agent in respective predetermined quantities, and then arranged in parallel in the longitudinal direction to obtain a bundle of reinforcing fibers.

This reinforcing fiber bundle was introduced into an opening defined by the mandrel 10 and die 11a, thus obtaining a thin-walled hollow hardened blank 12 with an inner diameter of 32 mm and a thickness of 1.0 mm. The mandrel 10 had a length of 1.5 m, and the die 11a had a length of 0.5 m and was held at a temperature of 180 °C.

Around the hollow hardened blank 12 thus obtained as the core, circumferentially arranged resin-impregnated reinforcing fiber layer 13 consisting of the reinforcing fibers (i.e., carbon fibers) 8b wound at an angle of +45 degrees by using the circumferential winder 4c and the resin mixture 9b of the same composition as the resin mixture 9a was formed, and the circumferentially arranged resin-impregnated reinforcing fiber layer 14 consisting of reinforcing fibers (i.e., carbon fibers) 8c wound at an angle of -45 degrees by using the circumferential winder 4d and the resin mixture 9c of the same composition as the resin mixture 9a was formed. Further, a fiber bundle consisting of the reinforcing fibers (i.e., carbon fibers) 8d and the resin mixture 9d of the same composition as the resin mixture 9a was then formed longitudinally around the layer 14 to obtain the longitudinal resin-impregnated reinforcing fiber layer 15 which was then introduced into the die 11b 0.5 m in length and held at 180 °C to obtain a final product.

The final product 16 so obtained was a round pipe with an inner diameter of 32 mm, an outer diameter of 38 mm and a wall thickness of 3 mm. The thin-walled hollow hardened blank 12 and the reinforcing fiber layers 13 to 15 had respective thicknesses of 1.0, 0.5, 0.5 and 1.0 mm.

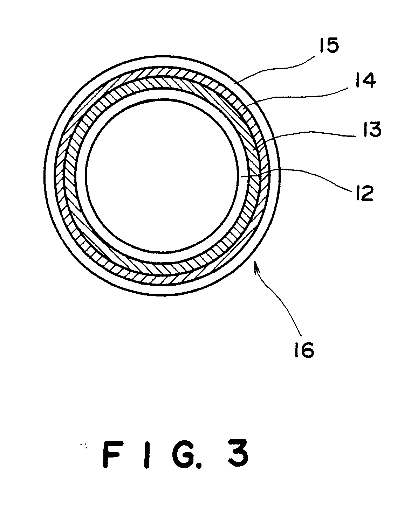

Fig. 3 shows the section of the final product obtained in the above way.

Table 1 shows results of torsion test and dimensional accuracy measurement made on the pipe obtained.

Comparative Example 1

The procedure of Example 1 was followed except that all the reinforcing fibers were arranged in the longitudinal direction without the use of a circumferential winder, thereby to obtain a round pipe as the same size as the final product 16 obtained in Example 1. The thus obtained pipe was evaluated in the same manner as in Example 1. Table 1 shows the results.

Comparative Example 2

A round pipe having the same structure as the final product 16 in Example 1 was formed using the draw-forming apparatus as shown in Fig. 1, and the same evaluation as in Example 1 was carried out on the obtained pipe. Table 1 shows the results.

Table 1

| Example. Comp. Example | Shearing stress | Shearing modulus of elasticity | Outer diameter | | Thickness | |
|---|---|---|---|---|---|---|
| | (kg f/mm²) | (t f/mm²) | (mm) | | (mm) | |
| | | | Max. | Min. | Max. | Min. |
| Example 1 | 35 | 3.0 | 38.1 | 37.9 | 3.1 | 3.0 |
| Comp. Ex.1 | 15 | 1.2 | 38.2 | 37.9 | 3.1 | 2.9 |
| Comp. Ex.2 | 30 | 2.6 | 38.5 | 37.3 | 3.4 | 2.6 |

**Claims**

1. A method of manufacturing a FRP-made hollow product comprising the steps of:
arranging thermosetting resin-impregnated reinforcing fibers in parallel in the longitudinal direction,
passing said arranged reinforcing fibers through an opening defined by a mandrel and a die to obtain a thin-

4

walled hollow hardened blank,
further arranging synthetic resin-impregnated reinforcing fibers around said blank as the core in both the circumferential and longitudinal directions and then,
again passing the whole through a die thereby to obtain the FRP-made hollow product.

2. A method as claimed in claim 1, wherein the thin-walled hollow hardened blank, has a thickness of from 1 - 5mm.

3. A method as claimed in claim 1 or 2 wherein the further arranged reinforcing fibres are arranged at an angle of $\pm$ 10 to $\pm$ 80$^\circ$, preferably $\pm$ 30 to $\pm$ 60$^\circ$, to the longitudinal axis of the thin-walled hollow hardened blank.

4. A method as claimedin any preceeding claim wherein the thin-walled hollow hardened blank, a layer of circumferentially arranged reinforcing fibres and a layer of longitudinally arranged reinforcing fibres respectively occupy from 20 to 40%, from 20 to 50% and from 10 to 60% of the FRP composite comprised by said hollow product.

5. A method as claimed in any preceeding claim, wherein the reinforcing fibres are selected from carbon fibres, glass fibres, and aramide fibres.

6. A method as claimed in preceeding claim, wherein the thermosetting resin is selected from unsaturated polyester resins, vinylester resins, epoxy resins, phenol resins, furan resins and polyimide resins.

7. A method as claimed in any preceeding claim, wherein a synthetic resin is a thermosetting resin and is selected from unsaturated polyesters resins, vinylester resins, epoxy resins, phenol resins, furan resins and polymide resins.

F I G. 1

F I G. 2

F I G. 3